# EUROPÄISCHE PATENTSCHRIFT

(11) **EP 0 826 555 B1**
(45) Veröffentlichungstag und Bekanntmachung des Hinweises auf die Patenterteilung: **05.12.2001**
(21) Anmeldenummer: 96113825.2
(22) Anmeldetag: 29.08.1996
(51) Int. Cl.: B60R 13/02

(54) **Flächiges Auskleidungsteil aus mehrlagigem Fasermaterial, insbesondere Kraftfahrzeug-Innenverkleidungsteil**
Flat lining mask of multilayered fibrous material, especially interior liners for vehicles
Revêtement plat en matière fibreuse multicouche, en particulier revêtement intérieur pour véhicules

(43) Veröffentlichungstag der Anmeldung: 04.03.1998
(73) Patentinhaber: Feinpappenwerk Gebr. Schuster GmbH & Co. KG, 85221 Dachau (DE)
(72) Erfinder: Schuster, Sigmar, 85232 Günding (DE)
(74) Vertreter: Prechtel, Jörg, Dipl.-Phys. Dr.

(56) Entgegenhaltungen:
- FR-A- 2 480 181
- GB-A- 1 035 753
- US-A- 2 823 951
- US-A- 3 042 446
- US-A- 3 953 067
- US-A- 4 992 320

## Beschreibung

Die Erfindung betrifft ein flächiges Auskleidungsteil aus mehrlagigem Fasermaterial, insbesondere Kraftfahrzeug-Innenverkleidungsteil wie Dachverkleidung oder dergleichen, zur An' bringung an einem Träger, insbesondere Karosserieblech. Derartige Auskleidungsteile dienen unterschiedlichen Zwecken wie der Geräuschdämmung, insbesondere der Reduzierung von Schwingungsanregungen des flächigen Trägers, insbesondere Karosserieblechs. Das Auskleidungsteil kann auch der Festigkeitsverstärkung dienen, insbesondere zur Erhöhung der Beulenfestigkeit der bei neueren Kraftfahrzeugen relativ wenig gekrümmten und daher weniger in sich stabilen Metall-Dachhaut oder Metall-Türhaut. Schließlich kann das Auskleidungsteil auch deshalb vorgesehen sein, um das Äußere des Trägers zu verbessern oder um einen angenehmeren Griff zu bieten.

Ein derartiges gattungsgemäßes Auskleidungsteil ist bekannt (US-A-3,953,067). Zur leichteren Formanpassung an die Wölbung eines Karosseriedachs werden Bombierungsschlitze 60 eingesetzt, die parallel zur jeweiligen Krümmungsachse verlaufen. Um der Dachverkleidung das Aussehen einer mit Abnäher-Nähten bzw. Polsterungs-Nähte versehenen textilen Dachverkleidung zu geben und auch der Aussteifung der Dachverkleidung, werden eine Reihe von quer zur Fahrzeuglängsrichtung verlaufenden und nach oben abstehenden Rippen 30 in die Dachverkleidung durch dreimaliges Abkanten eingeformt. Entlang der Kanten verlaufende Bombierungsschlitze 38, 40, 42 erleichtern diesen Formungsvorgang.

Eine Dachverkleidungskonstruktion aus einer Vielzahl von flexiblen Paneelteilen ist bekannt, wobei zur Erleichterung der Formanpassung wiederum Bombierungsschlitze vorgesehen sein können (US-A-2,823,951).

Beim Einsatz derartiger Auskleidungsteile aus mehrlagigem Fasermaterial tritt jedoch das Problem der unterschiedlichen thermischen Ausdehnung von Auskleidungsteil und Träger, insbesondere Karosserieblech, auf. Im Falle einer metallischen Dachhaut kann diese bei Sonneneinstrahlung Temperaturen über 100°C annehmen mit entsprechend starker thermischer Ausdehnung. Das Fasermaterial, insbesondere im Falle von Wellpappe, zieht sich dagegen bei Temperaturerhöhung zusammen, vor allem aufgrund der zunehmenden Abgabe der inneren Feuchtigkeit. Da das Auskleidungsteil jedoch mit der Dachhaut über die gesamte Anlagefläche zumindest punktweise verklebt ist, übt es auf die Dachhaut entsprechende Zugkräfte aus, die zu einem Wellen oder Ausbeulen der Dachhaut führen können. Zumindest bei höherwertigen Fahrzeugen führen derartige Dachhautverformung zu Kundenreklamationen beim Kraftfahrzeughersteller.

Der Erfindung liegt die Aufgabe zugrunde, ein flächiges Auskleidungsteil der eingangs genannten Art bereitzustellen, welches bei einfacher Handhabung im wesentlichen keine Verformungen des Trägers aufgrund unterschiedlicher thermischer Ausdehnung von Auskleidungsteil und Träger hervorruft.

Diese Aufgabe wird dadurch gelöst, daß das flächige Auskleidungsteil mit wenigstens einem Zugspannungs-Ausgleichsschlitz versehen ist, welcher nur einen Teil der Lagen des Fasermaterials durchtrennt und der im wesentlichen quer zu einer Hauptrichtung einer aufgrund unterschiedlicher thermischer Ausdehnung von Auskleidungsteil und Träger im Auskleidungsteil auftretenden Zugspannung verläuft.

Da der Zugspannungsausgleichsschlitz nicht sämtliche Lagen des Fasermaterials durchtrennt, ist weiterhin ein durchgehender Zusammenhalt des Auskleidungsteils gewährleistet, so daß seine Funktion, insbesondere Festigkeitsverstärkung, Schalldämmung und Verbesserung des Aussehens, allenfalls geringfügig beeinträchtigt ist. Der Kraftweg der vom Ausgleichsschlitz durchtrennten wenigstens einen Lage des Fasermaterials ist jedoch unterbrochen, so daß diese Lage bzw. Lagen keine entsprechend hohe Zugspannung über ihre gesamte zur Hauptrichtung parallele Längendimension aufbauen können. Durch Erhöhung der Anzahl der Ausgleichsschlitze auf einer oder beiden Seiten des Auskleidungsteils kann die maximal auftretende Zugspannung in gewünschter Weise auch auf geringe Werte reduziert werden. In vielen Fällen, insbesondere dann, wenn das Auskleidungsteil als Dachverkleidung ausgebildet ist, reicht es bereits aus, wenn der Abstand der Entlastungsschlitze auf einer Seite des Auskleidungsteils zwischen 20 und 80 cm, besser zwischen 50 und 70 cm, am besten bei etwa 60 cm liegt.

Wenn die Entlastungsschlitze an beiden Seiten des Auskleidungsteils an gleichen Stellen verlaufen, besteht die Gefahr, daß dort das Auskleidungsteil aufreißt. Um dies zu verhindern, wird vorgeschlagen, daß die Entlastungsschlitze an beiden Seiten des Auskleidungsteils entweder einander kreuzen oder bei Parallellage gegeneinander versetzt sind.

Für das mehrlagige Fasermaterial des Auskleidungsteils kommt bevorzugt Wellpappe in Frage, da dieses bei geringem Gewicht und niedrigen Herstellungskosten bereits eine ziemlich hohe Steifigkeit aufweist. Auch ist Pappe vom Umweltstandpunkt aus besonders günstig aufgrund seines hohen Recyclinganteils (bis zu 95 %). Auch sind seine akustischen Eigenschaften besser als die von Bitumen-Schichten, was möglicherweise auf höhere Biegesteifigkeit zurückzuführen ist.

In diesem Falle ist vorgesehen, daß der wenigstens eine Entlastungsschlitz lediglich eine der beiden Decklagen sowie zumindest teilweise die nächstliegende Wellenlage durchtrennt, nicht jedoch die Zwischenlage. Die nicht durchtrennte Zwischenlage sorgt zum einen für den gewünschten Zusammenhalt; zum anderen ist die Zwischenlage im allgemeinen relativ dünn und daher weiteraus dehnbarer als die durchtrennte Decklage. Die Zwischenlage kann daher weiterhin durchgehend ausgebildet sein. Die im vorstehenden angesprochenen Entlastungsschlitze dienen also dazu, die parallel zur Hauptrichtung der Zugspannung verlaufenden Abschnitte wenigstens einer der beiden Decklagen an wenigstens einer Stelle lokal zu durchtrennen, um dort für einen Spannungsausgleich mit Expansionsmöglichkeit zu sorgen. Die Entlastungsschlitze müssen dabei nicht über die gesamte Breite des Auskleidungsteils verlaufen. Es können auch kurze Entlastungsschlitze so über die entsprechende Seite des Auskleidungsteils verteilt sein, daß ein wesentlicher Teil der zur Hauptrichtung parallelen Decklagenstreifen jeweils an wenigstens einer Stelle durchtrennt ist.

Bei einer bekannten Herstellungsart für ein flächiges Auskleidungsteil wird dieses an beiden Seiten mit Kunstharz versehen und anschließend in einer Heißpresse auf die gewünschte Endform gebracht, insbesondere bei Preßtemperaturen im Bereich von etwa 130°C. Diese Auskleidungsteile sind zwar ausreichend formstabil; nachteilig ist das zumindest in einer Anfangszeit unvermeindliche Ausgasen von flüchtigen Harzbestandteilen, wie Formaldehyd. In einer vorteilhaften Alternative hierzu wird das Auskleidungsteil zusätzlich zu den Entlastungsschlitzen mit wenigstens einem Bombierungsschlitz versehen. Das als ebener Zuschnitt angelieferte Auskleidungsteil nimmt dann erst beim Anbringen am Träger, insbesondere Karosserieblech, seine gewünschte Raumform ein, was durch die genannten Bombierungsschlitze ermöglicht wird. Bevorzugt ist hierbei vorgesehen, daß das Auskleidungsteil mit parallel zu einer Hauptkrümmungsachse verlaufenden Bombierungsschlitzen an der Krümmungsaußehseite des Auskleidungsteils versehen ist, welche nur einen Teil der Lagen des Fasermaterials durchtrennen. Zur Anpassung an doppelt gekrümmte Bereiche des Trägers können ggf. schräg verlaufende, das Fasermaterial vollständig durchtrennende Randschlitze vorgesehen sein.

Bei dem beschriebenen Einsatz der Wellpappe mit Bombierungsschlitzen unter Wegfall der Beharzung und der Heißpreß-Formgebung ergibt sich jedoch das Problem der nicht ausreichenden Feuchtigkeitsbeständigkeit des herkömmlichen Wellpappenmaterials. Herkömmliche unbeharzte Wellpappe verliert seine Festigkeit und Biegesteifigkeit und quillt unter Umständen sogar auf oder wirft Wellen, wenn es mit Feuchtigkeit in Verbindung kommt. Auch ist die Kontraktion dieses Materials bei Temperaturerhöhung ziemlich groß, was auf die zunehmende Abgabe von Feuchtigkeit zurückgeführt wird.

Zusätzlich, aber ggf. auch unabhängig vom vorstehend beschriebenem Gedanken der Einarbeitung von Zugspannungs-Ausgleichsschlitzen wird erfindungsgemäß vorgeschlagen, daß das flächige Auskleidungsteil aus feuchtigkeitsbeständig ausgerüsteter Wellpappe gebildet ist. Dies löst das technische Problem der Reduktion der Gefahr der Verformung des Trägers aufgrund unterschiedlicher thermischer Ausdehnung von Auskleidungsteil und Träger unter der Bedingung minimaler Lösungsmittelausgasung und ausreichender Feuchtigkeitsbeständigkeit des Auskleidungsteils. Es hat sich gezeigt, daß die feuchtigkeitsbeständig ausgerüstete Wellpappe deutlich geringere thermische Ausdehnung bei Temperaturerhöhung aufweist, was darauf zurückzuführen ist, daß das Feuchtigkeits-Aufnahmevermögen dieser Wellpappe wesentlich reduziert ist. Da die Beharzung der Wellpappe vor dem Heißpreßvorgang entfällt, ist die Lösungsmittelausgasung der am Träger angebrachten Wellpappe (bei entsprechend lösungsmittelfreiem Kleber) praktisch auf Null reduziert. Dennoch ist die geforterte Feuchtigkeitsbeständigkeit auch ohne Beharzung gegeben.

Derartige Wellpappe ist unter der Qualitätsbezeichnung "Tropenqualität-naßfest" erhältlich. Bei dieser Qualität werden die Decklagen bereits bei der Wellpappenherstellung feuchtigkeitsbeständig imprägniert und zwar vorzugsweise mit Harz, insbesondere Harnstoffharz oder Formalinharz. Nach der Imprägnierung werden die Decklagen mit den Wellenlagen unter Heißpressen zusammengeführt. Da dieses Heißpressen insbesondere bei etwa 200°C stattfindet und von vornherein minimaler Harzanteil vorgesehen ist, sind am fertigen Produkt praktisch keine freien Monomere mehr vorhanden; ein Ausgasen ist im wesentlichen ausgeschlosssen.

Die erfindungsgemäß feuchtigkeitsbeständig ausgerüstete Wellpappe wird mit besonderem Vorteil in Verbindung mit den eingangs erläuterten Zugspannungs-Ausgleichsschlitzen eingesetzt, weil dieses Material wegen des Wegfalls der Heißpressung sowieso mit Bombierungsschlitzen zu versehen ist, so daß die Einarbeitung der Ausgleichsschlitze keine prinzipiell neue Bearbeitungsstufe darstellt. Die Einarbeitung des Bombierungsschlitzmusters kann ggf. gleichzeitig mit der Einarbeitung des Ausgleichsschlitzmusters erfolgen.

Von Vorteil ist auch, daß es aufgrund des erfindungsgemäßen Zugspannungsabbaus nicht mehr notwendig ist, ausschließlich Wellenlagen einzusetzen, deren Wellentäler bzw. Wellenberge quer zur Hauptrichtung verlaufen, um einen Zugspannungsaufbau durch die Wellenlagen zu verhindern. Es können erfindungsgemäß daher Wellenlagen mit unterschiedlicher Orientierung innerhalb eines Auskleidungsteils eingesetzt werden, vorzugsweise mit zueinander senkrecht verlaufenden Wellen. Dies hat den Vorteil, daß die Unidirektionalität aufgehoben wird mit entsprechender Verbesserung des Dämpfungsverhaltens sowie der mechanischen Festigkeit.

Die Erfindung betrifft schließlich auch ein Verfahren zur Auskleidung eines Trägers, insbesondere eines Karosserieblechs, mit einem Auskleidungsteil, insbesondere wie vorstehend beschrieben, mit folgenden Schritten:
a) Ausstanzen eines entsprechenden Zuschnitts des Auskleidungsteils aus einer Bahn des mehrlagigen Fasermaterials, insbesondere Wellpappe,
b) Schneiden von Zugspannungs-Entlastungsschlitzen in den Zuschnitt,
c) ggf. Einschneiden von Bombierungsschlitzen in den Zuschnitt,
d) Aufbringen von Klebstoff auf den Zuschnitt und/oder auf den Träger,
e) flächiges Andrücken des Zuschnitts an den Träger.

Das Verfahren ist einfach und schnell durchzuführen. Der Aufbau von erhöhten Zugspannungen wird zuverlässig verhindert. Das Ausgasen von Lösungsmitteln kann ausgeschlossen werden.

Hierzu trägt auch bei, wenn der Klebstoff eine im wesentlichen formaldehydfreier Polyurethankleber ist.

Die Erfindung wird im folgenden anhand von bevorzugten Ausführungsbeispielen erläutert. Es zeigt:

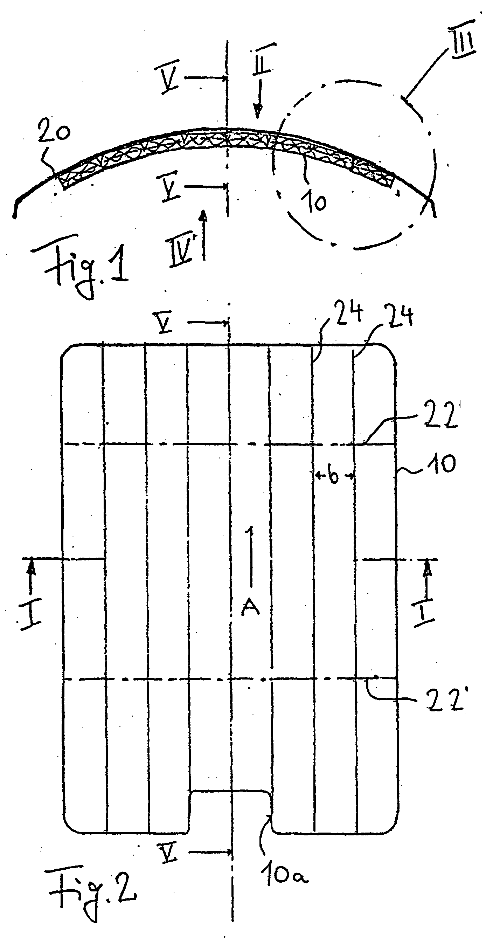

- Figur 1: einen vereinfachten Querschnitt einer erfindungsgemäß mit Dachverkleidung versehenen Dachhaut eines Kraftfahrzeugs (Schnitt nach Linie I-I in Figur 2;
- Figur 2: eine Draufsicht auf die Dachverkleidung gemäß Figur 1 (Blickrichtung II in Figur 1);
- Figur 3: das Detail III in Figur 1;
- Figur 4: eine Unteransicht der Verkleidung gemäß Figuren 1 und 2 (Blickrichtung IV in Figur 1);

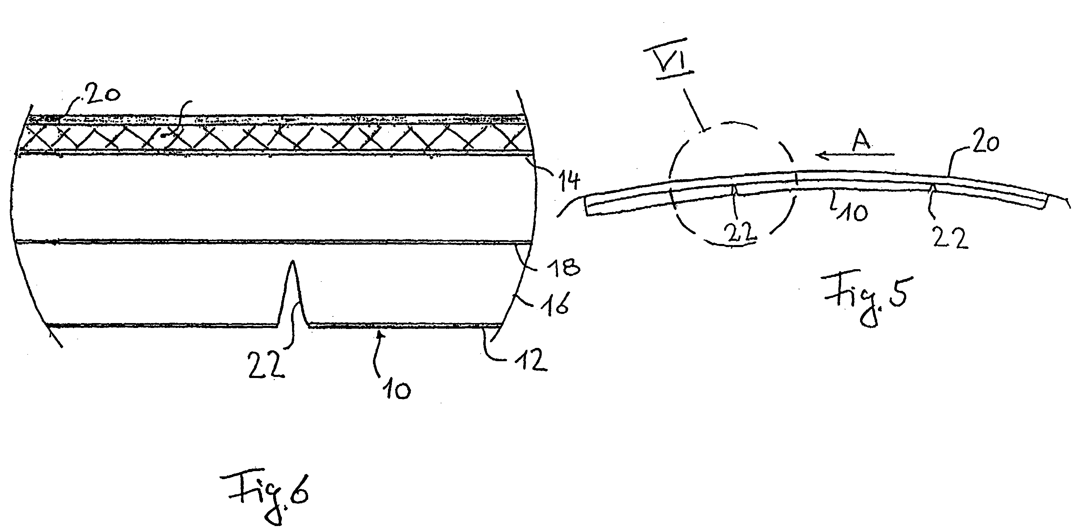

- Figur 5: einen vereinfachten Längsschnitt der Dachhaut samt Dachverkleidung (Schnittlinie V-V in den Figuren 1, 2 und 4); und
- Figur 6: das Detail VI in Figur 5.

Nachstehend wird am Beispiel einer Dachverkleidung der Einsatz des erfindungsgemäßen Auskleidungsteils demonstriert. Es ist zu betonen, daß eine Vielzahl weiterer Anwendungsmöglichkeiten bestehen, bei denen es auf eine flächige Abdeckung eines Trägers wie eines Metallblechs ankommt. Das eingesetzte mehrlagige Fasermaterial (bevorzugt Wellpappe) sorgt aufgrund seiner mechanischen Eigenschaften, insbesondere Zugfestigkeit und Biefefestigkeit, für eine mechanische Verstärkung des Trägers sowie für Geräuschdämmung. Dabei ist das eingesetzte Material feuchtigkeitsbeständig, so daß es besonders vielseitig einsetzbar ist. Dennoch gibt das Material praktisch keine Lösungsmitteldämpfe ab, so daß es auch in Innenräumen von Gebäuden oder von Kraftfahrzeugen eingesetzt werden kann.

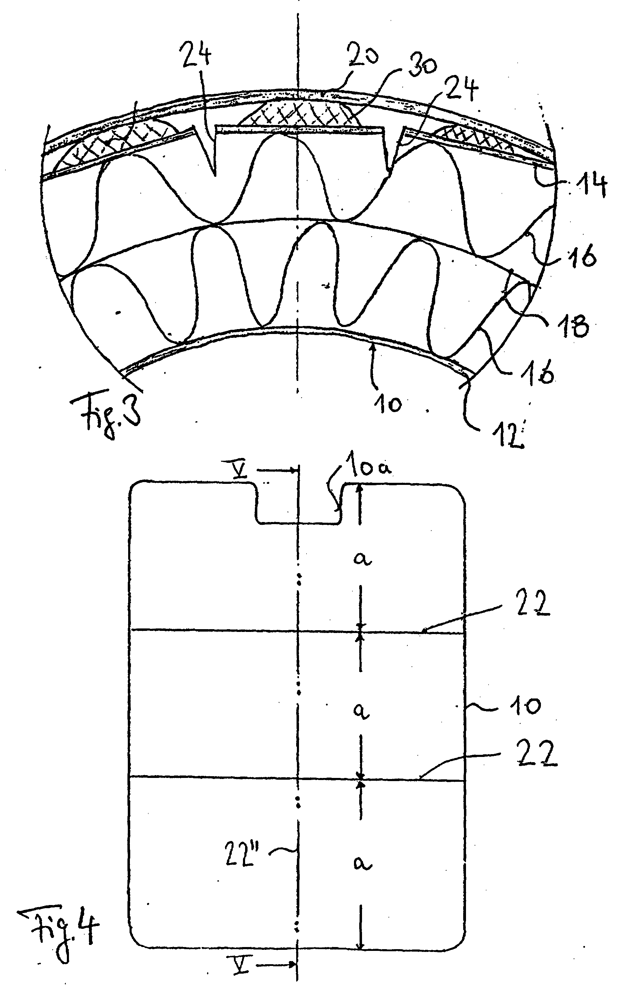

Der Schichtaufbau des in den Figuren allgemein mit 10 bezeichneten Auskleidungsteils in Form einer Dachverkleidung geht insbesondere aus Figur 3 hervor. Man erkennt zwei äußere Decklagen 12 und 14, auf die jeweils eine Wellenlage 16 folgt; eine Zwischenlage 18 befindet sich zwischen den beiden Wellenlagen 16. Bei dem verwendeten feuchtigkeitsresistenten Pappenmaterial handelt es sich um die sogenannte "Tropenqualität-naßfest", Hersteller "Europakarton", Gottlieb-Daimler-Str. 8, 94447 Plattling. Die beiden Decklagen 12, 14 bestehen bevorzugt aus relativ starkem Material der Qualität "Kraft-liner/naßfest" mit 400 g/m². Die Zwischenlage 18 besteht bevorzugt aus der Qualität "Kraft-liner" mit 125 g/m². Die beiden Wellenlagen 16 bestehen bevorzugt der aus Qualität "fluting" mit 127 g/m². Dieses an sich bekannte Material hat deshalb praktisch keine Lösungsmittel-Ausgasung, da vor dem Zusammenführen und Heißpressen der fünf Lagen nur die beiden Deckschichten geringfügig beharzt werden (Harnstoffharze oder Formalinharze). Bei dem Heißpressen mit Temperaturen im Bereich von 200°C entweichen die Lösungsmittel praktisch vollständig; freie Momomere sind anschließend im wesentlichen nicht mehr vorhanden.

Aus dem vom Pappenhersteller angelieferten Pappenmaterial in der beschriebenen Qualität wird zur Bildung der Dachverkleidung 10 ein entsprechender Pappkartonzuschnitt herausgestanzt oder herausgeschnitten. Im dargestellten Ausführungsbeispiel ist die Dachverkleidung für ein relativ langes PKW-Dach bestimmt (Kombi-Variante mit Heckklappe). Die Dachverkleidung 10 hat dementsprechend eine längliche Rechteckform mit abgerundeten Ecken. Man erkennt einen Ausschnitt 10a für eine Innenbeleuchtung.

Bei einer Erwärmung der Dachhaut 20 dehnt sich diese in entsprechender Weise aus. Die absoluten Dehnungswerte sind in Längsrichtung naturgemäß größer als in Querrichtung aufgrund der größeren Längendimension des Daches. Da bei starker Sonneneinstrahlung Dachhauttemperaturen über 100°C erreicht werden, ergeben sich absolute Längenänderungen der Dachhaut im Bereich von mehreren Millimetern, im Extremfall bis zu 1 cm. Umgekehrt zieht sich das Pappenmaterial der Dachverkleidung bei Temperaturerhöhung zusammen, wenn auch im Falle des hier eingesetzten naßfesten Materials nur geringfügig aufgrund des vergleichsweise geringen inneren Feuchtigkeitsaufnahmevermögens. Die zumindest punktweise über die gesamte Oberseite (Decklage 14) mit der Dachhaut 20 verklebte Dachverkleidung 10 mit ihrer ziemlich hohen Zugfestigkeit und Zugwiderstand würde daher entsprechend hohe Zugkräfte auf die heiße Dachhaut 20 ausüben, wenn nicht gemäß der Erfindung für einen Zugspannungsausgleich in der Dachverkleidung 10 gesorgt wäre. Dieser Zugspannungsausgleich besteht in wenigstens einem Zugspannungs-Ausgleichsschlitz quer zu einer Hauptrichtung der aufgrund unterschiedlicher thermischer Ausdehnung von Dachverkleidung 10 und Dachhaut 20 in der Dachverkleidung 10 auftretenden Zugspannung. Im dargestellten Ausführungsbeispiel fällt diese Hauptrichtung mit der Längsrichtung A des Fahrzeugs zusammen; die Ausgleichsschlitze sind somit als Querschlitze, d. h. quer zur Längsrichtung A verlaufend ausgebildet. Es hat sich herausgestellt, daß es zum Abbau der maximalen Zugspannung bereits ausreicht, wenn die Querschlitze 22 einen Abstand a zum nächstfolgenden Querschnitt bzw. zum nächstgelegenen Längsende aufweisen, der im Bereich zwischen 20 und 80 cm, besser zwischen 50 und 70 cm, am besten bei etwa 60 cm liegt. Durch entsprechende Variation des Abstands a kann die maximal auftretende Zugspannung auf einen gewünschten Wert gebracht werden.

Im dargestellten Ausführungsbeispiel sind lediglich Querschlitze 22 an der von der Dachhaut 20 abgewandten Unterseite der Dachverkleidung 10 vorgesehen, was sich als ausreichend herausgestellt hat. Bei Bedarf kann man alternativ oder zusätzlich an der Oberseite der Dachverkleidung 10 Querschlitze vorsehen, wie diese in Figur 2 mit einer Strich-Punkt-Linie angedeutet und mit 22' bezeichnet sind. Sofern Querschlitze 22 und 22' an beiden Seiten vorgesehen sind, und diese parallel zueinander verlaufen, werden die Querschlitze 22 und 22' zweckmäßigerweise in Längsrichtung A etwas gegeneinander versetzt, so daß ein lokales Aufreißen der Dachverkleidung 10 auf jeden Fall vermieden wird.

Gemäß Figur 6 durchtrennt der jeweilige Querschlitz 22 bzw. 22' nämlich nur die zugeordnete Decklage 12 bzw. 14 und zumindest teilweise die darauffolgende Wellenlage 16, nicht dagegen die Zwischenlage 18. Ohne die angesprochene Versetzung der Querschlitze 22 und 22' bestünde die Gefahr, daß die ungeschlitzt durchgehende Zwischenlage 18 lokal aufreißt. Die Ränder des auf diese Weise gebildeten Spaltes könnten sich dann unter Umständen gegeneinander in Richtung senkrecht zur Dachhautebene verlagern, was sich als lokale Stufe in der Dachhaut abzeichnen könnte. Auch würde ein vollständiges Aufreißen unter Umständen die mechanischen und akustischen Eigenschaften der Dachverkleidung 10 beeinträchtigen.

Um auch zur Längsrichtung A quer verlaufende, bei Temperaturerhöhung auftretende Querspannungen zu kappen, können dementsprechende Zugspannungs-Ausgleichsschlitze in Form von Längsschlitzen vorgesehen sein, wie in Figur 4 mit einer Strich-Punkt-Punkt-Linie angedeutet und mit 22'' bezeichnet.

Im dargestellten Ausführungsbeispiel können diese Längsschlitze 22'' jedoch unter Umständen auch entfallen, und zwar deshalb, weil bereits an der Oberseite des Auskleidungsteils 10 ein Muster aus Längsschlitzen 24 vorgesehen ist, jedoch mit vergleichsweise geringem Schlitzabstand b im Bereich weniger cm, insbesondere von 6 cm. Diese Längsschlitze 24 sind sogenannte Bombierungsschlitze, die gemäß Figur 3 an der im Einbauzustand konvexen Oberseite der Dachverkleidung 10 angebracht sind, um die gewünschte Krümmung um eine zur Längsrichtung A parallele Krümmungsachse ohne größeren inneren Spannungsaufbau zuzulassen. Auch diese Längsschlitze 24 dringen nur soweit ein, daß sie die Zwischenlage 18 nicht durchtrennen. Zur Anpassung an anders gewölbte Dachformen, insbesondere zweifach gekrümmte Dachformen, können auch quer- oder schrägverlaufende Bombierungsschlitze vorgesehen sein, die im Randbereich der Dachverkleidung 10 auch als durchgehende Schlitze ausgebildet sein können.

Das Auskleidungsteil 10 wird also nach dem Austanzen aus dem Wellkartonmaterial und vor der Anbringen an der Dachhaut 20 mit zwei Schlitzmustern versehen, nämlich einem Bombierungs-Schlitzmuster (hier aus den Längsschlitzen 24 lediglich an der Oberseite) sowie einem Zugspannungs-Ausgleichsschlitzmuster (hier die Querschlitze 22 lediglich an der Unterseite, ggf. zusätzlich mit den Schlitzen 22' an der Oberseite, ggf. zusätzlich mit dem Schlitz 22''). Die Schlitze können dabei durch feststehende Messer oder rotierende Messer eingeschnitten werden, mit entsprechender Relativverschiebung von Messer und Wellpappenzuschnitt. Das Einschneiden ist unproblematisch, da das Vellpappenmaterial nicht beharzt ist.

Die so vorbereitete Dachverkleidung 10 wird dann mit der Dachhaut 20 verklebt mit Zwischenlage von Klebstoff 30. Dieser Klebstoff 30 kann in üblicher Weise in Form von parallel zur Richtung A verlaufenden Raupen aufgetragen werden, am besten jeweils zwischen zwei Längsschlitzen 24. Es kommen aber auch andere Klebstoffmuster in Frage, wie z. B. ein Netz aus Klebstoffraupen oder eine vollflächige Verklebung, ggf. unter Verwendung einer doppelseitig klebenden Zwischenfolie. Da mit Hilfe der Zugspannungs-Entlastungsschlitze die maximal auftretende Zugspannung in der jeweiligen Spannungsrichtung wahlweise beschränkt werden kann, muß bei der Verklebung keine Rücksicht mehr auf den Spannungsverlauf genommen werden. Die Verklebung kann dann z. B. so erfolgen, daß sich optimale Festigkeit und/oder optimale Geräusch- und Vibrationsdämmung ergibt.

Im Einbauzustand unterbrechen die Zugspannungs-Entlastungsschlitze den Kraftweg durch die entsprechende vom Schlitz 22 durchtrennte Decklage 12 (siehe Figur 6) bzw. 14. Der Schlitz 22 wird sich je nach Längenänderung dementsprechend weit öffnen, wobei im allgemeinen die Zwischenlage 18 ohne zu reißen nachgibt, da sie vergleichsweise dünn ist. Das verwendete Pappenmaterial ist feuchtigkeitsbeständig und gibt keine Lösungsmitteldämpfe ab. Um den Kraftfahrzeuginnenraum frei von diesen Dämpfen zu halten, wird als Klebstoff 24 ein im wesentlichen formaldehydfreier Polyurethankleber eingesetzt.

Weitere Anwendungen für das vorstehend beschriebene flächige Auskleidungsteil aus mehrlagigem Fasermaterial sind: Türauskleidung, Motorhaubenauskleidung, Kofferraumdeckelauskleidung, Hutablage, Motorraum-Geräuschdämmung, Bodenblechdämmung oder dergleichen.

## Patentansprüche

1. Flächiges Auskleidungsteil aus mehrlagigem Fasermaterial, insbesondere Kraftfahrzeug-Innenverkleidungsteil wie Dachverkleidung (10) oder dergleichen, zur Anbringung an einem Träger, insbesondere Karosserieblech (20),
**dadurch gekennzeichnet,**
**daß** es mit wenigstens einem Zugspannungs-Ausgleichsschlitz (22, 22', 22'') versehen ist, welcher nur einen Teil der Lagen (12, 14, 16, 18) des Fasermaterials durchtrennt und der im wesentlichen quer zu einer Hauptrichtung einer aufgrund unterschiedlicher thermischer Ausdehnung von Auskleidungsteil und Träger im Auskleidungsteil auftretenden Zugspannung verläuft.

2. Auskleidungsteil nach Anspruch 1, **dadurch gekennzeichnet, daß** das Auskleidungsteil aus Wellpappe gebildet ist mit wenigstens zwei Wellenlagen (16), einer dazwischenliegenden Zwischenlage (18) sowie zwei Decklagen (12, 14).

3. Auskleidungsteil nach Anspruch 2, **dadurch gekennzeichnet, daß** der wenigstens eine Entlastungsschlitz lediglich eine der beiden Decklagen (12, 14) sowie zumindest teilweise die nächstliegende Wellenlage (16) durchtrennt, nicht jedoch die Zwischenlage (18).

4. Auskleidungsteil nach Anspruch 2 oder 3, **dadurch gekennzeichnet, daß** das Auskleidungsteil auf beiden Seiten mit wenigstens einem, zumindest die jeweilige Decklage (12, 14) durchtrennenden Entlastungsschlitz versehen ist.

5. Auskleidungsteil nach Anspruch 4, **dadurch gekennzeichnet, daß** die Entlastungsschlitze auf beiden Seiten des Auskleidungsteils entweder einander kreuzen oder bei Parallellage gegeneinander versetzt sind.

6. Auskleidungsteil nach einem der vorhergehenden Ansprüche, **dadurch gekennzeichnet, daß** der Abstand (a) der Entlastungsschlitze auf einer Seite des Auskleidungsteils zwischen 20 und 80 cm, besser zwischen 50 und 70 cm, am besten bei etwa 60 cm liegt.

7. Auskleidungsteil nach einem der vorhergehenden Ansprüche, **dadurch gekennzeichnet, daß** das als Dachverkleidung (10) ausgebildete Auskleidungsteil wenigstens einseitig mit zwei zur Fahrzeuglängsrichtung (A) quer verlaufenden Entlastungsschlitzen (22, 22') versehen ist.

8. Auskleidungsteil nach einem der vorhergehenden Ansprüche, **dadurch gekennzeichnet, daß** das Auskleidungsteil zusätzlich mit wenigstens einem Bombierungsschlitz (24) versehen ist.

9. Auskleidungsteil nach Anspruch 8, **dadurch gekennzeichnet, daß** das Auskleidungsteil mit parallel zu einer Hauptkrümmungsachse verlaufenden Bombierungsschlitzen (24) an der Krümmungsaußenseite des Auskleidungsteils versehen ist, welche nur einen Teil der Lagen des Fasermaterials durchtrennen.

10. Auskleidungsteil nach Anspruch 9, **gekennzeichnet durch** ggf. schrägverlaufende, das Fasermaterial vollständig durchtrennende Randschlitze zur Anpassung an doppelt gekrümmte Bereiche des Trägers.

11. Auskleidungsteil nach einem der vorhergehenden Ansprüche, **dadurch gekennzeichnet, daß** die Wellenlagen (16) unterschiedlich orientiert sind und vorzugsweise zueinander senkrecht verlaufende Wellen aufweisen.

12. Flächiges Auskleidungsteil nach einem der vorhergehenden Ansprüche oder dem Oberbegriff des Anspruchs 1, **dadurch gekennzeichnet, daß** es aus feuchtigkeitsbeständig ausgerüsteter Wellpappe gebildet ist.

13. Auskleidungsteil nach Anspruch 12, **dadurch gekennzeichnet, daß** es aus Wellpappe in Tropenqualitätnaßfest gebildet ist.

14. Auskleidungsteil nach Anspruch 12 oder 13, **dadurch gekennzeichnet, daß** es aus Wellpappe gebildet ist, deren Decklagen (12, 14) bei der Wellpappenherstellung feuchtigkeitsbeständig behandelt sind.

15. Auskleidungsteil nach Anspruch 14, **dadurch gekennzeichnet, daß** die Decklagen (12, 14) mit Harz, insbesondere Harnstoffharz oder Formalinharz versehen und anschließend mit den Wellenlagen (16) unter Heißpressen zusammengeführt werden.

16. Verfahren zur Auskleidung eines Trägers, insbesondere eines Karosserieblechs mit einem Auskleidungsteil, insbesondere gemäß einem der vorhergehenden Ansprüche mit folgenden Schritten:
a) Ausstanzen eines entsprechenden Zuschnitts des Auskleidungsteils aus einer Bahn des mehrlagigen Fasermaterials, insbesondere Wellpappe,
b) Schneiden von Zugspannungs-Entlastungsschlitzen in den Zuschnitt,
c) ggf. Einschneiden von Bombierungsschlitzen in den Zuschnitt,
d) Aufbringen von Klebstoff auf den Zuschnitt und/oder auf den Träger,
e) flächiges Andrücken des Zuschnitts an den Träger.

17. Verfahren nach Anspruch 16, **dadurch gekennzeichnet, daß** der Klebstoff ein im wesentlichen formaldehydfreier Polyurethankleber ist.

## Claims

1. Flat lining part made of multi-layered fibrous material, in particular interior lining part for vehicles such as roof panelling (10) or the like, for attaching to a carrier, in particular car body sheet-metal (20), **characterised in that** it is provided with at least one tensile stress compensating slot (22, 22', 22'') which penetrates only a portion of the layers (12, 14, 16, 18) of the fibrous material and which substantially extends transversely to a main direction of a tensile stress occurring in the lining part owing to different thermal expansion of lining part and carrier.

2. Lining part according to claim 1, **characterised in that** the lining part is formed from corrugated board with at least two corrugated layers (16), an intermediate layer (18) located therebetween and two outer layers (12, 14).

3. Lining part according to claim 2, **characterised in that** the at least one tension relief slot penetrates only one of the two outer layers (12, 14) and the adjacent corrugated layer (16) at least partially, but not the intermediate layer (18).

4. Lining part according to claim 2 or 3, **characterised in that** the lining part is provided on both sides with at least one tension relief slot penetrating at least the respective outer layer (12, 14).

5. Lining part according to claim 4, **characterised in that** the tension relief slots either intersect one another on both sides of the lining part or are mutually offset in the parallel position.

6. Lining part according to any one of the preceding claims, **characterised in that** the spacing (a) of the tension relief slots is between 20 and 80 cm, preferably between 50 and 70 cm, most preferably approximately 60 cm, on one side of the lining part.

7. Lining part according to any one of the preceding claims, **characterised in that** the lining part formed as roof panelling (10) is provided on at least one side with two tension relief slots (22, 22') extending! transversely to the longitudinal direction of the vehicle (A).

8. Lining part according to any one of the preceding claims, **characterised in that** the lining part is additionally provided with at least one camber slot (24).

9. Lining part according to claim 8, **characterised in that** the lining part is provided with camber slots (24) extending parallel to a main axis of curvature on the outside of the curvature of the lining part, which camber slots (24) only penetrate a portion of the layers of the fibrous material.

10. Lining part according to claim 9, **characterised by** optionally obliquely extending edge slots completely penetrating the fibrous material for adaptation to regions of the carrier with a double bend.

11. Lining part according to any one of the preceding claims, **characterised in that** the corrugated layers (16) are oriented differently and preferably have undulations extending perpendicular to one another.

12. Flat lining part according to any one of the preceding claims or the preamble of claim 1, **characterised in that** it is formed from moisture-resistant corrugated board.

13. Lining part according to claim 12, **characterised in that** it is formed from corrugated board of tropical quality wet strength.

14. Lining part according to claim 12 or 13, **characterised in that** it is formed from corrugated board, the outer layers (12, 14) of which are treated during the corrugated board production so as to be moisture-resistant.

15. Lining part according to claim 14, **characterised in that** the outer layers (12, 14) are provided with resin, in particular urea resin or formalin resin, and are subsequently joined to the corrugated layers (16) with hot pressing.

16. Process for lining a carrier, in particular car body sheet-metal, with a lining part, in particular in accordance with one of the preceding claims with the following steps:
a) punching an appropriate blank of the lining part from a web of the multi-layered fibrous material, in particular corrugated board,
b) cutting tensile stress relief slots into the blank,
c) optionally cutting camber slots into the blank,
d) applying adhesive to the blank and/or to the carrier,
e) flat pressing of the blank onto the carrier.

17. Process according to claim 16, **characterised in that** the adhesive is a substantially formaldehyde-free polyurethane adhesive.

## Revendications

1. Revêtement plat en matière fibreuse multicouche, en particulier revêtement intérieur de véhicule, tel qu'un revêtement de toit (10) ou similaire, destiné à être posé sur un support, en particulier une tôle de carrosserie (20),
**caractérisé en ce qu'**
il est pourvu d'au moins une fente de compensation de l'effort de traction (22, 22', 22") qui ne sépare qu'une partie des couches (12, 14, 16, 18) de matière fibreuse et qui s'étend sensiblement transversalement par rapport à la direction principale d'un effort de traction qui s'exerce en raison d'une dilatation thermique qui diffèreientre le revêtement et le support du revêtement.

2. Revêtement selon la revendication 1, **caractérisé en ce que** le revêtement est constitué en carton ondulé, avec au moins deux couches ondulées (16), une couche intermédiaire (18) située entre elles, ainsi que deux couches de recouvrement (12, 14).

3. Revêtement selon la revendication 2, **caractérisé en ce que** la fente d'équilibrage, au nombre minimum d'une, n'est ménagée qu'à travers l'une des deux couches de recouvrement (12, 14) ainsi qu'au moins partiellement à travers la couche ondulée (16) immédiatement adjacente, mais pas à travers la couche intermédiaire (18).

4. Revêtement selon la revendication 2 ou 3, **caractérisé en ce que** le revêtement est pourvu, des deux côtés, d'au moins une fente d'équilibrage, ménagée au moins à travers la couche de recouvrement (12, 14) correspondante.

5. Revêtement selon la revendication 4, **caractérisé en ce que** les fentes d'équilibrage présentes sur les deux faces du revêtement se croisent ou sont décalées les unes par rapport aux autres lorsqu'elles sont parallèles.

6. Revêtement selon l'une des revendications précédentes, **caractérisé en ce que** l'écart (a) entre les fentes d'équilibrage présentes sur une face du revêtement est compris entre 20 et 80 cm, de préférence entre 50 et 70 cm et, de façon encore préférée, est d'approximativement 60 cm.

7. Revêtement selon l'une des revendications précédentes, **caractérisé en ce que** le revêtement conformé en revêtement de toit (10) est pourvu, au moins sur une face, de deux fentes d'équilibrage (22, 22') qui s'étendent perpendiculairement à une direction longitudinale du véhicule (A).

8. Revêtement selon l'une des revendications précédentes, **caractérisé en ce que** le revêtement est pourvu, en supplément, d'au moins une fente pour partie bombée (24).

9. Revêtement selon la revendication 8, **caractérisé en ce que** le revêtement est pourvu de fentes pour partie bombée (24), s'étendant parallèlement à un axe principal de courbure, présentes sur la face externe de la courbure du revêtement, fentes qui ne sont ménagées que sur une partie des couches de matière fibreuse.

10. Revêtement selon la revendication 9, **caractérisé par** des fentes marginales, le cas échéant obliques, séparant totalement la matière fibreuse, destinées à s'adapter aux zones à double courbure du support.

11. Revêtement selon l'une des revendications précédentes, **caractérisé en ce que** les couches ondulées (16) présentent des orientations différentes et présentent, de préférence, des ondulations perpendiculaires les unes aux autres.

12. Revêtement plat selon l'une des revendications précédentes ou selon le préambule de la revendication 1, **caractérisé en ce qu'**il est constitué en carton ondulé traité pour résister à l'humidité.

13. Revêtement selon la revendication 12, **caractérisé en ce qu'**il est constitué en carton ondulé de qualité résistant à l'humidité dans des conditions tropicales.

14. Revêtement selon la revendication 12 ou 13, **caractérisé en ce qu'**il est constitué en carton ondulé dont les couches de recouvrement (12, 14) sont traitées pour résister à l'humidité lors de la fabrication du carton ondulé.

15. Revêtement selon la revendication 14, **caractérisé en ce que** les couches de recouvrement (12, 14) sont imprégnées de résine, en particulier de résine d'urée ou de résine de formaline et sont ensuite assemblées aux couches ondulées (16) par pressage à chaud.

16. Procédé de revêtement d'un support, en particulier d'une tôle de carrosserie, avec un revêtement, en particulier selon l'une des revendications précédentes, comprenant les étapes suivantes :
a) matriçage d'un flan formant revêtement à partir d'une bande de matière fibreuse multicouche, en particulier de carton ondulé,
b) découpe, dans le flan, de fentes d'équilibrage des efforts de traction,
c) le cas échéant, incision, dans le flan, de fentes pour partie bombée,
d) application de colle sur le flan et/ou sur le support,
e) appui, à plat, du flan sur le support.

17. Procédé selon la revendication 16, **caractérisé en ce que** la colle est une colle au polyuréthane sensiblement sans formaldéhyde.
